# EUROPEAN PATENT APPLICATION

(11) **EP 4 814 802 A1**
(43) Date of publication of application: **30.09.2026**
(21) Application number: 26167115.0
(22) Date of filing: 24.03.2026
(51) Int. Cl.: G06N 3/063, G06N 3/045, G06N 3/0495, G06N 3/048

(54) **QUANTIZED FLASH ATTENTION**

(30) Priority: 28.03.2025 US 202563780076 P; 08.09.2025 US 202519321931
(71) Applicant: Tesla, Inc., Austin, TX 78725 (US)
(72) Inventor: RAWAT, Ritvik, Austin, Texas, 78725 (US); SAMPATHKUMAR, Srihari, Austin, Texas, 78725 (US); SINGH, Alex, Austin, Texas, 78725 (US); SAMPATHKUMAR, Srihari, Austin, Texas, 78725 (US)
(74) Representative: Liesegang, Eva

(57) **Abstract**

Embodiments include systems and methods for processing sensor data and generating operational instructions for automated devices. The automated device includes hardware (e.g., INT8 MAC units, FP32 SIMD processors) and software operations executing a machine-learning architecture having transformer architectures implementing mixed-precision quantization for ingesting and analyzing various types of sensor data. The machine-learning architecture implements a transformer that includes dynamic quantization layers that dynamically quantize tensors, per-token, for downstream operations of the transformer and machine-learning architecture.

## Description

### CROSS-REFERENCE TO RELATED APPLICATION

This application claims priority to U.S. Provisional Application No. 63/780,076, filed March 28, 2025, which is incorporated by reference in its entirety.

### TECHNICAL FIELD

The present application relates generally to neural network architecture for automated devices (e.g., robotics, autonomous vehicles).

### BACKGROUND

Flash attention is a memory-efficient algorithm designed for computing self-attention in transformer models. Flash attention is optimized to reduce memory usage and enhance computational speed, primarily targeting graphic processing units (GPUs) and similar accelerators with floating point multiply-accumulate (MAC) cores. Flash attention works by fusing attention computation with tiling-based memory management, which avoids redundant reads and writes to GPU memory and leverages on-chip static random-access memory (SRAM) efficiently. This approach computes attention matrices in smaller blocks, thus reducing the memory complexity from quadratic to linear with respect to sequence length. As a result, flash attention is highly advantageous for large-scale models such as generative pre-trained transformer (GPT), large language model meta AI (LLaMA), and bidirectional encoder representations from transformers (BERT), enabling larger batch sizes, deeper models, and faster training.

### SUMMARY

Embodiments described herein implement quantized flash attention as an improved approach to existing flash attention. Quantized flash attention addresses the limitations of existing flash attention implementations on neural network accelerators, which may include accelarators equipped with, for example, Multiply-Accumulate (MAC) units and Single Instruction, Multiple Data (SIMD) processors, such as 4-bit integer (INT4), 8-bit integer (INT8), or 16-bit integer (INT16) MAC units, and 32-bit floating point (FP32) SIMD processors. Quantized flash attention addresses these limitations of existing accelerators by employing dynamic quantization techniques, including per-token quantization, in which each token's associated feature vector (e.g., query, key, or value vector) is quantized independently using a dynamically computed scale factor. This method uses mixed precision for various stages of attention computation, leveraging low-power INT cores for dense arithmetic while maintaining high precision where necessary, such as in softmax calculations. By dynamically quantizing per token and using optimized data formats, quantized flash attention achieves efficient memory use and improved computational quality, such that quantized flash attention may handle larger context lengths without compromising performance, even in embedded devices with limited SRAM.

Embodiments may include method including: obtaining, by a processor, a plurality of input tokens representing input data; generating, by the processor, a plurality of feature vectors based upon the plurality of input tokens, the feature vectors having a number of bits according to a first precision; executing, by the processor, a dynamic quantization to one or more of the feature vectors based upon a level of precision, to update the number of bits of the feature vectors according to a second precision corresponding to the level of precision for the input data to a subsequent computation operation; generating, by the processor, a similarity value using the feature vectors; generating, by the processor, one or more attention weights using a normalization function applied to the similarity value; generating, by the processor, a weighted sum of one or more of the feature vectors using the attention weights; and generating, by the processor, an intermediate context representation for the plurality of input tokens by aggregating the weighted sums.

The method may include generating the similarity value using the feature vectors includes generating, by the processor, an output of a matrix multiplication operation between a first feature vector and a second feature vector. The output may include a set of similarity scores between the input tokens of the first feature vector and the input tokens of the second feature vector.

The method may include storing, by the processor, one or more quantization scale factors in a floating-point format. Applying the stored scale factors may include scaling one or more of the feature vectors prior to or during the matrix multiplication operation to generate the similarity scores. The input data may include sensor data from one or more sensors of an automated device. The feature vectors include a query vector, key vector, and a value vector. The dynamic quantization may be performed per-token for each of the query vector, the key vector, and the value vector. The second precision may include an integer format. The method may include using a higher-precision floating-point format for softmax computation and intermediate values. The method may include using a signless floating-point format for intermediate values. A sign bit may be reallocated to increase mantissa precision. The normalization function may include a fast exponentiation approximation. The processor may aggregate a plurality of weighted sums for a plurality of blocks of the input data.

Embodiments may include a processor configured to: obtain a plurality of input tokens representing input data; generate a plurality of feature vectors based upon the plurality of input tokens, the feature vectors having a number of bits according to a first precision; execute a dynamic quantization to one or more of the feature vectors based upon a level of precision, to update the number of bits of the feature vectors according to a second precision corresponding to the level of precision for the input data to a subsequent computation operation; generate a similarity value using the feature vectors; generate one or more attention weights using a normalization function applied to the similarity value; generate a weighted sum of one or more of the feature vectors using the attention weights; and generate an intermediate context representation for the plurality of input tokens by aggregating the weighted sums.

When generating the similarity value the processor may be further configured to generate an output of a matrix multiplication operation between a first feature vector and a second feature vector. The output may include a set of similarity scores between the input tokens of the first feature vector and the input tokens of the second feature vector.

The processor may be further configured to store one or more quantization scale factors in a floating-point format. Applying the stored scale factors may include scaling one or more of the feature vectors prior to or during the matrix multiplication operation to generate the similarity scores. The input data may include sensor data from one or more sensors of an automated device. The feature vectors may include a query vector, key vector, and a value vector. The dynamic quantization may be performed per-token for each of the query vector, the key vector, and the value vector. The second precision may include an integer format, and the processor is further configured to use a higher-precision floating-point format for softmax computation and intermediate values. The processor may be configured to use a signless floating-point format for intermediate values, wherein a sign bit is reallocated to increase mantissa precision. The normalization function may include a fast exponentiation approximation. The processor may be configured to aggregate a plurality of weighted sums for a plurality of blocks of the input data.

### BRIEF DESCRIPTION OF THE DRAWINGS

Non-limiting embodiments of the present disclosure are described by way of example concerning the accompanying figures, which are schematic and are not intended to be drawn to scale. Unless indicated as representing the background art, the figures represent aspects of the disclosure.
**FIG. 1A** is a non-limiting example of components of a system in which the methods and systems discussed herein can be implemented, according to an embodiment.
**FIGS. 1B-1C** illustrate block diagrams of sensors integrated within the egos, according to an embodiment.
**FIGS. 2A-2C** are example dataflows amongst components of a mixed-precision transformer portion of variants of a machine-learning architecture implementing quantized flash attention, according to an embodiment.
**FIG. 3** is a chart showing results of implementing certain embodiments of a mixed-precision transformer portion of variants of the machine-learning architecture implementing quantized flash attention, according to an embodiment.
**FIG. 4** is a flowchart of an example method of a mixed-precision transformer portion of a machine-learning architecture implementing quantized flash attention, according to an embodiment.

### DETAILED DESCRIPTION

Reference will now be made to the illustrative embodiments depicted in the drawings, and specific language will be used here to describe the same. It will nevertheless be understood that no limitation of the scope of the claims or this disclosure is thereby intended. Alterations and further modifications of the inventive features illustrated herein, and additional applications of the principles of the subject matter illustrated herein, which would occur to one skilled in the relevant art and having possession of this disclosure, are to be considered within the scope of the subject matter disclosed herein. Other embodiments may be used and/or other changes may be made without departing from the spirit or scope of the present disclosure. The illustrative embodiments described in the detailed description are not meant to be limiting to the subject matter presented.

A mixed-precision quantization framework is designed for transformer models of machine-learning architectures and optimized for accelerators, which may be equipped with INT8 MAC units (e.g., INT4 MAC, INT8 MAC, INT15 MAC, INT16 MAC) and FP32 SIMD processors (e.g., FP32 SIMD). The mixed-precision transformer architecture leverages high-throughput datatypes, enabling the efficient use of both integer and floating-point arithmetic. The input data undergoes several transformations and normalizations within the mixed-precision transformer. The input data may include types of tokenizable data that components of the machine-learning architecture, such as the transformer, may tokenize, extract, or otherwise parse into tokens and/or process as tokens of the input data. Embodiments described herein implement input sensor data, though embodiments are not so limited. The input data may include virtually all structured or unstructured data types and formats, including but not limited to sensor data, image data, audio signals, text, tabular data, and time-series data, among others. Moreover, the embodiments described herein may implement mixed-precision quantization with quantized flash attention.

Attention is a mechanism in transformer architectures that enables models to focus on relevant parts of the input sequence when generating output. The attention operations can include generating query (Q) vectors, key (K) vectors, and value (V) vectors, where each input token is projected into the three respective vectors: Query (what to look for), Key (what to compare against), and Value (the content to aggregate). The attention operations can include a similarity calculation in which the Q vector of a token is compared against the K vectors of each token, typically by using a dot product (matrix multiplication) for the Q vectors and K vectors to calculate similarity scores. The attention operations may include weighting and aggregation, in which these similarity scores are normalized (using softmax) to produce weights that are then used to form a weighted sum of the V vectors. This produces a context-aware representation of the token. As used herein, the term "feature vectors" refers broadly to any vector representations derived from input tokens that are used in attention computations. In some embodiments, feature vectors may include query vectors, key vectors, and value vectors, which are commonly used in transformer-based architectures. However, the techniques described herein are not limited to these specific types and may apply to other vector representations used in alternative attention mechanisms or neural network layers.

Flash attention is an optimized, memory-efficient algorithm designed for computing self-attention in transformers architecture of machine-learning architectures. Flash attention reduces memory usage and improves speed by fusing attention computation with tiling-based memory management. Existing implementations of flash attention face notable shortcomings, especially when applied to neural network accelerators. While flash attention on high precision data, such as BF16, performs well, attempts to implement flash attention with components that typically implement lower-precision data, such as INT8 cores, which have struggled to maintain the quality of results.

A significant issue in proposed solutions is that measuring the Mean Relative Error (MRE) of outputs, as done in prior approaches, fails to accurately reflect the real-world performance of the network. Experiments have shown that this method is unreliable even for small context lengths, such as in LLAMA 1.3B with 256 context. Thus, there is a need for improved techniques that ensure high efficiency and quality when using lower precision data types in flash attention implementations. Moreover, flash attention typically runs on high-precision data, such as BF16, and uses floating point math for MAC operations. Another existing approach to INT8 flash attention measures the Mean Relative Error (MRE) of the outputs. However, these approaches do not reflect the quality of results in a real network and do not work well for very small context lengths.

The flash attention functions include a blockwise tiled operation. Rather than computing full, dense attention matrices that can be memory intensive, flash attention parses the similarity operations into smaller tiles that better utilize GPU memory (e.g., shared memory or registers). Flash attention includes a kernel fusion operation that fuses multiple steps, such as the dot product, softmax, and weighted sum, into a single GPU kernel. This reduces memory bandwidth usage and overhead from multiple memory accesses. The flash attention approach avoids redundant reads/writes to GPU memory and leverages on-chip SRAM efficiently. Rather than storing full attention matrices, flash attention computes the matrices and attention in small blocks. As such, flash attention is particularly useful for large-scale models, such as GPT, LLaMA, and BERT, enabling larger batch sizes, deeper models, and faster training on GPUs.

Existing flash attention approaches typically operate using high-precision data types, such as BF16, and employ floating point math for MAC operations, which are not ideal for low-power embedded devices. The existing approaches also require substantial memory usage, limiting its effectiveness in environments with constrained resources. A proposed solution for flash attention predominantly relied on measuring the MRE of outputs, but this proposed solution failed to provide an accurate reflection of real-world performance within neural networks. Experiments of this proposed approach have demonstrated the unreliability of MRE, particularly when applied to small context lengths, such as in LLAMA 1.3B with 256 context. Consequently, there is a need for improved techniques to flash attention to achieve both high efficiency and computational quality while utilizing lower precision data types in flash attention implementations.

The various features and functions described herein may be applicable to any data type or format of input data that can be tokenized, for various types of sources or modalities from which the input data may be received. This includes input data originated at or received from, for example, sensors, documents, or logs, among other types of digital sources. Embodiments described herein employ dynamic quantization and flash attention in order to implement quantized flash attention on INT MAC cores. Quantization operations use one or more scale factors to convert numerical representations from one level of precision to another level of precision, such as converting data from a higher-precision format (e.g., floating-point data format) into lower-precision formats (e.g., integer data format) to reduce memory usage and improve computational efficiency. Embodiments may implement dynamic quantization and, in some cases, static quantization. Dynamic quantization refers to a type of quantization in which scale factors are computed at runtime based on, for example, the observed range of values in the data being processed or other types of parameter for determining the scale factors. Static quantization refers to quantization in which scale factors are preconfigured and fixed prior to runtime.

Embodiments may implement quantization at various levels of input data, such as per-token quantization or per-layer quantization, among others. Per-token quantization refers to quantization that is applied individually to one or more feature vectors (e.g., query, key, or value vector) of each token. In per-token quantization, each token's vector(s) is quantized using a scale factor. Each token in a sequence of tokens is projected into a high-dimensional vector space, and the resulting vectors of the particular token are quantized independently based on the scale factor. This approach contrasts with, for example, per-layer quantization, which applies a single scale to values across an entire tensor, rather than the feature vector(s) of each token. In per-token static quantization, each token's feature vector is quantized using a scale factor, preconfigured prior to runtime. In per-token dynamic quantization, each token's feature vector is quantized using a scale factor that is computed dynamically at runtime based on one or more parameters, such as statistical properties (e.g., minimum and maximum values, range of values) of that specific vector or other types of parameters. In some embodiments, per-token quantization is performed dynamically at runtime, and the corresponding scale factors are stored in floating-point format (e.g., FP32) in registers or memory for reuse in downstream operations.

Quantized flash attention refers to a memory-efficient and compute-efficient implementation of the flash attention operations, as adapted for execution on low-precision hardware, such as INT8 MAC units. Flash attention is a technique for computing self-attention in transformer models using blockwise tiling and kernel fusion to reduce memory overhead. Quantized flash attention incorporates, for example, dynamic quantization (e.g., per-token quantization), mixed-precision arithmetic (e.g., INT8, BF16, E8M7, E8M8), and hardware-aware optimizations (e.g., fast exponentiation approximations, signless floating-point formats). In this way, quantized flash attention enables low-precision hardware, memory-constrained hardware, and/or power-efficient hardware to execute flash attention operations while also maintaining data fidelity as the data moves through the architecture. Embodiments implement quantized flash attention using mixed-precision transformers, with dynamic quantization layers, for flash attention. In some cases, this dynamic quantized flash attention allows sophisticated automated devices (e.g., robotics, autonomous vehicles) to use low-power, high-efficiency INT cores that are typically found in low-power embedded devices. In some cases, this dynamic quantized flash attention enables the automated device to use arbitrarily large context lengths that are typically too large for dynamic random-access memory (DRAM) or SRAM.

In some embodiments, the new quantized flash attention approach includes alternative mathematical operations to those typically used for conventional flash attention, such as fast exponentiation approximations and removing the sign bit in certain operations, to optimize performance on INT8 and other relatively low precision hardware. In some embodiments, quantized flash attention may include operations for optimizing block sizes for dynamic quantization, balancing memory usage and precision, which is not implemented in existing flash attention approaches.

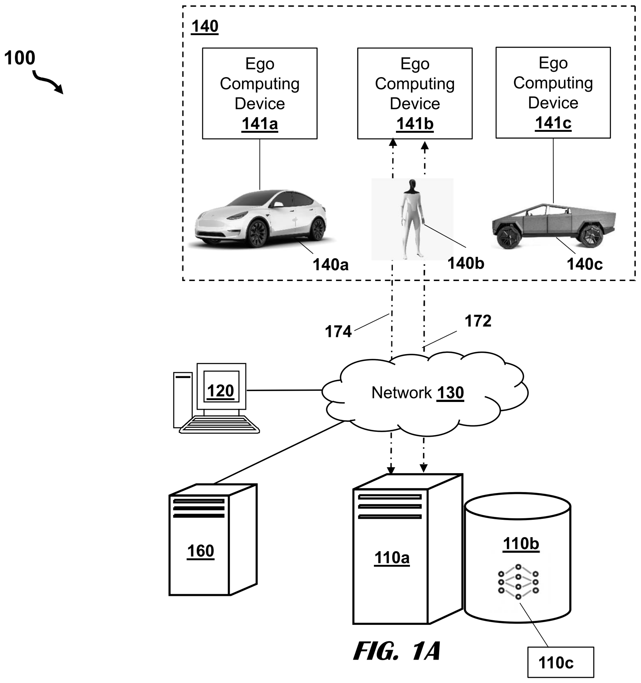

**FIG. 1A** is a non-limiting example of components of a system in which the methods and systems discussed herein can be implemented. **FIG. 1A** illustrates components of an AI-enabled visual data analysis system **100.** The system **100** may include an analytics server **110a,** a system database **110b,** an administrator computing device **120,** egos **140a-b** (collectively ego(s) **140**), ego computing devices **141a-c** (collectively ego computing devices **141**), and a server **160.** The system **100** is not confined to the components described herein and may include additional or other components not shown for brevity, which are to be considered within the scope of the embodiments described herein.

The above-mentioned components may be connected through a network 130. Examples of the network **130** may include, but are not limited to, private or public LAN, WLAN, MAN, WAN, and the Internet. The network **130** may include wired and/or wireless communications according to one or more standards and/or via one or more transport mediums.

The communication over the network **130** may be performed in accordance with various communication protocols such as Transmission Control Protocol and Internet Protocol (TCP/IP), User Datagram Protocol (UDP), and IEEE communication protocols. In one example, the network **130** may include wireless communications according to Bluetooth specification sets or another standard or proprietary wireless communication protocol. In another example, the network **130** may also include communications over a cellular network, including, for example, a GSM (Global System for Mobile Communications), CDMA (Code Division Multiple Access), or an EDGE (Enhanced Data for Global Evolution) network.

The system **100** illustrates an example of a system architecture and components that can be used to train and execute one or more AI models, such the AI model(s) **110c.** Specifically, as depicted in **FIG. 1A** and described herein, the analytics server **110a** can execute the AI model(s) **110c** using data retrieved from the egos **140** (e.g., by using data streams **172** and **176**) to make navigational decisions. When the AI model(s) **110c** have been trained, each of the egos **140** may have access to and execute the trained AI model(s) **110c.** For instance, the vehicle **140a** having the ego computing device **141a** may transmit its camera feed to the trained AI model(s) **110c** and may determine the occupancy status of its surroundings (e.g., data stream **174**). Moreover, the data ingested and/or predicted by the AI model(s) **110c** with respect to the egos **140** (at inference time) may also be used to improve the AI model(s) **110c.** Therefore, the system **100** depicts a continuous loop that can periodically improve the accuracy of the AI model(s) **110c.** Moreover, the system **100** depicts a loop in which data received the egos **140** can be used to at training phase in addition to the inference phase.

The analytics server **110a** may be configured to collect, process, and analyze navigation data (e.g., images captured while navigating) and various sensor data collected from the egos **140.** The collected data may then be processed and prepared into a training dataset. The training dataset may then be used to train one or more AI models, such as the AI model **110c.** The analytics server **110a** may also be configured to collect visual data from the egos **140.** Using the AI model **110c** (trained using the methods and systems discussed herein), the analytics server **110a** may generate navigational decisions for the egos **140.**

In **FIG. 1A****,** the AI model **110c** is illustrated as a component of the system database 110b, but the AI model **110c** may be stored in a different or a separate component, such as cloud storage or any other data repository accessible to the analytics server **110a.**

The analytics server **110a** may also be configured to display an electronic platform illustrating various training attributes for training the AI model **110c.** The electronic platform may be displayed on the administrator computing device **120,** such that an analyst can monitor the training of the AI model **110c.** An example of the electronic platform generated and hosted by the analytics server **110a** may be a web-based application or a website configured to display the training dataset collected from the egos **140** and/or training status/metrics of the AI model **110c.**

The analytics server **110a** may be any computing device comprising a processor and non-transitory machine-readable storage capable of executing the various tasks and processes described herein. Non-limiting examples of such computing devices may include workstation computers, laptop computers, server computers, and the like. While the system **100** includes a single analytics server **110a,** the system **100** may include any number of computing devices operating in a distributed computing environment, such as a cloud environment.

The egos **140** may represent various electronic data sources that transmit data associated with their previous or current navigation sessions to the analytics server **110a.** The egos **140** may be any apparatus configured for navigation, such as a vehicle **140a** and/or a truck **140c.** The egos **140** are not limited to being vehicles and may include robotic devices as well. For instance, the egos **140** may include a robot **140b,** which may represent a general purpose, bipedal, autonomous humanoid robot capable of navigating various terrains. The robot **140b** may be equipped with software that enables balance, navigation, perception, or interaction with the physical world. The robot **140b** may also include various cameras configured to transmit visual data to the analytics server **110a.**

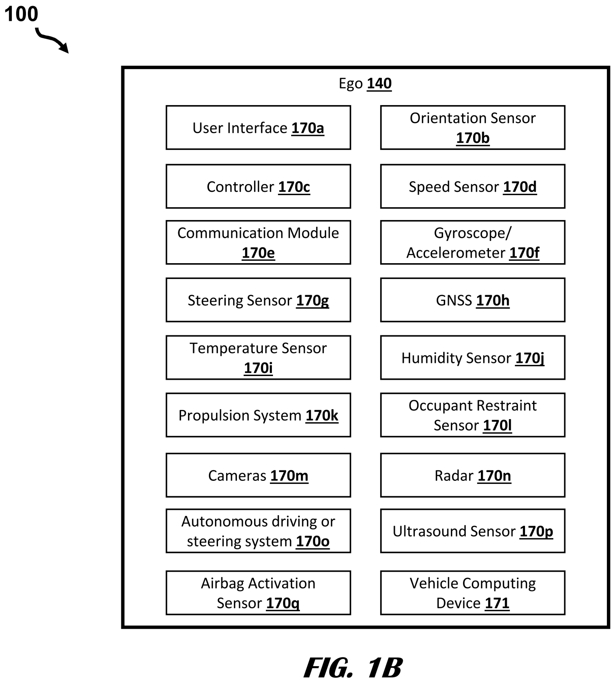

Even though referred to herein as an "ego," the egos **140** may or may not be autonomous devices configured for automatic navigation. For instance, in some embodiments, the ego **140** may be controlled by a human operator or by a remote processor. The ego **140** may include various sensors, such as the sensors depicted in **FIG. 1B****.** The sensors may be configured to collect data as the egos **140** navigate various terrains (e.g., roads). The analytics server **110a** may collect data provided by the egos **140.** For instance, the analytics server **110a** may obtain navigation session and/or road/terrain data (e.g., images of the egos **140** navigating roads) from various sensors, such that the collected data is eventually used by the AI model **110c** for training purposes.

As used herein, a navigation session corresponds to a trip where egos **140** travel a route, regardless of whether the trip was autonomous or controlled by a human. In some embodiments, the navigation session may be for data collection and model training purposes. However, in some other embodiments, the egos **140** may refer to a vehicle purchased, rented, leased, etc. by a consumer and the purpose of the trip may be categorized as everyday use. The navigation session may start when the egos **140** move from a non-moving position beyond a threshold distance (e.g., 0.1 miles, 100 feet) or exceed a threshold speed (e.g., over 0 mph, over 1 mph, over 5 mph). The navigation session may end when the egos **140** are returned to a non-moving position and/or are turned off (e.g., when a driver exits a vehicle).

The egos **140** may represent a collection of egos monitored by the analytics server **110a** to train the AI model(s) **110c.** For instance, a driver for the vehicle **140a** may authorize the analytics server **110a** to monitor data associated with their respective vehicle. As a result, the analytics server **110a** may utilize various methods discussed herein to collect sensor/camera data and generate a training dataset to train the AI model(s) **110c** accordingly. The analytics server **110a** may then apply the trained AI model(s) **110c** to analyze data associated with the egos **140** and to predict a navigational decision. Moreover, additional/ongoing data associated with the egos **140** can also be processed and added to the training dataset, such that the analytics server **110a** re-calibrates the AI model(s) **110c** accordingly. Therefore, the system **100** depicts a loop in which navigation data received from the egos **140** can be used to train the AI model(s) **110c.** The egos **140** may include processors that execute the trained AI model(s) **110c** for navigational purposes. While navigating, the egos **140** can collect additional data regarding their navigation sessions, and the additional data can be used to calibrate the AI model(s) **110c.** That is, the egos **140** represent egos that can be used to train, execute/use, and re-calibrate the AI model(s) **110c.** In a non-limiting example, the egos **140** represent vehicles purchased by customers that can use the AI model(s) **110c** to autonomously navigate while simultaneously improving the AI model(s) **110c.**

The egos **140** may be equipped with various technology allowing the egos to collect data from their surroundings and (possibly) navigate autonomously. For instance, the egos **140** may be equipped with inference chips to run self-driving software.

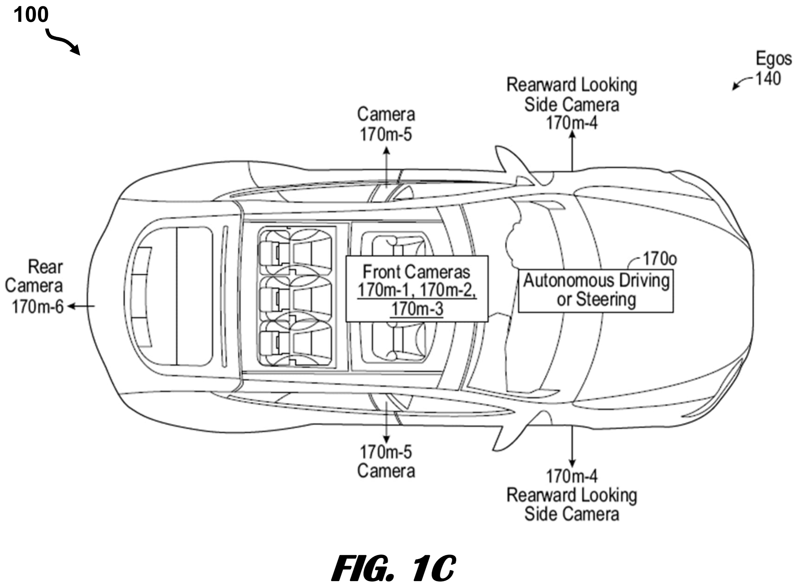

Various sensors for each ego **140** may monitor and transmit the collected data associated with different navigation sessions to the analytics server **110a.** **FIGS. 1B-C** illustrate block diagrams of sensors integrated within the egos **140,** according to embodiments. The number and position of each sensor discussed with respect to **FIGS. 1B-C** may depend on the type of ego discussed in **FIG. 1A****.** For instance, the robot **140b** may include different sensors than the vehicle **140a** or the truck **140c.** For instance, the robot **140b** may not include the airbag activation sensor **170q.** Moreover, the sensors of the vehicle **140a** and the truck **140c** may be positioned differently than illustrated in **FIG. 1C****.**

As discussed herein, various sensors integrated within each ego **140** may be configured to measure various data associated with each navigation session. The analytics server **110a** may periodically collect data monitored and collected by these sensors, wherein the data is processed in accordance with the methods described herein and used to train the AI model **110c** and/or execute the AI model **110c** to generate the occupancy map.

The egos **140** may include a user interface **170a.** The user interface **170a** may refer to a user interface of an ego computing device (e.g., the ego computing devices **141** in **FIG. 1A**). The user interface **170a** may be implemented as a display screen integrated with or coupled to the interior of a vehicle, a heads-up display, a touchscreen, or the like. The user interface **170a** may include an input device, such as a touchscreen, knobs, buttons, a keyboard, a mouse, a gesture sensor, a steering wheel, or the like. In various embodiments, the user interface **170a** may be adapted to provide user input (e.g., as a type of signal and/or sensor information) to other devices or sensors of the egos **140** (e.g., sensors illustrated in **FIG. 1B**), such as a controller **170c.**

The user interface **170a** may also be implemented with one or more logic devices that may be adapted to execute instructions, such as software instructions, implementing any of the various processes and/or methods described herein. For example, the user interface **170a** may be adapted to form communication links, transmit and/or receive communications (e.g., sensor signals, control signals, sensor information, user input, and/or other information), or perform various other processes and/or methods. In another example, the driver may use the user interface **170a** to control the temperature of the egos **140** or activate its features (e.g., autonomous driving or steering system **170o**). Therefore, the user interface **170a** may monitor and collect driving session data in conjunction with other sensors described herein. The user interface **170a** may also be configured to display various data generated/predicted by the analytics server **110a** and/or the AI model **110c.**

An orientation sensor **170b** may be implemented as one or more of a compass, float, accelerometer, and/or other digital or analog device capable of measuring the orientation of the egos **140** (e.g., magnitude and direction of roll, pitch, and/or yaw, relative to one or more reference orientations such as gravity and/or magnetic north). The orientation sensor **170b** may be adapted to provide heading measurements for the egos **140.** In other embodiments, the orientation sensor **170b** may be adapted to provide roll, pitch, and/or yaw rates for the egos **140** using a time series of orientation measurements. The orientation sensor **170b** may be positioned and/or adapted to make orientation measurements in relation to a particular coordinate frame of the egos **140.**

A controller **170c** may be implemented as any appropriate logic device (e.g., processing device, microcontroller, processor, application-specific integrated circuit (ASIC), field programmable gate array (FPGA), memory storage device, memory reader, or other device or combinations of devices) that may be adapted to execute, store, and/or receive appropriate instructions, such as software instructions implementing a control loop for controlling various operations of the egos **140.** Such software instructions may also implement methods for processing sensor signals, determining sensor information, providing user feedback (e.g., through user interface **170a**), querying devices for operational parameters, selecting operational parameters for devices, or performing any of the various operations described herein.

A communication module **170e** may be implemented as any wired and/or wireless interface configured to communicate sensor data, configuration data, parameters, and/or other data and/or signals to any feature shown in **FIG. 1A** (e.g., analytics server **110a**). As described herein, in some embodiments, communication module **170e** may be implemented in a distributed manner such that portions of communication module **170e** are implemented within one or more elements and sensors shown in **FIG. 1B****.** In some embodiments, the communication module **170e** may delay communicating sensor data. For instance, when the egos **140** do not have network connectivity, the communication module **170e** may store sensor data within temporary data storage and transmit the sensor data when the egos **140** are identified as having proper network connectivity.

A speed sensor **170d** may be implemented as an electronic pitot tube, metered gear or wheel, water speed sensor, wind speed sensor, wind velocity sensor (e.g., direction and magnitude), and/or other devices capable of measuring or determining a linear speed of the egos **140** (e.g., in a surrounding medium and/or aligned with a longitudinal axis of the egos **140**) and providing such measurements as sensor signals that may be communicated to various devices.

A gyroscope/accelerometer **170f** may be implemented as one or more electronic sextants, semiconductor devices, integrated chips, accelerometer sensors, or other systems or devices capable of measuring angular velocities/accelerations and/or linear accelerations (e.g., direction and magnitude) of the egos **140,** and providing such measurements as sensor signals that may be communicated to other devices, such as the analytics server **110a.** The gyroscope/accelerometer **170f** may be positioned and/or adapted to make such measurements in relation to a particular coordinate frame of the egos **140.** In various embodiments, the gyroscope/accelerometer **170f** may be implemented in a common housing and/or module with other elements depicted in **FIG. 1B** to ensure a common reference frame or a known transformation between reference frames.

A global navigation satellite system (GNSS) **170h** may be implemented as a global positioning satellite receiver and/or another device capable of determining absolute and/or relative positions of the egos **140** based on wireless signals received from space-born and/or terrestrial sources, for example, and capable of providing such measurements as sensor signals that may be communicated to various devices. In some embodiments, the GNSS **170h** may be adapted to determine the velocity, speed, and/or yaw rate of the egos **140** (e.g., using a time series of position measurements), such as an absolute velocity and/or a yaw component of an angular velocity of the egos **140.**

A temperature sensor **170i** may be implemented as a thermistor, electrical sensor, electrical thermometer, and/or other devices capable of measuring temperatures associated with the egos **140** and providing such measurements as sensor signals. The temperature sensor **170i** may be configured to measure an environmental temperature associated with the egos **140,** such as a cockpit or dash temperature, for example, which may be used to estimate a temperature of one or more elements of the egos **140.**

A humidity sensor **170j** may be implemented as a relative humidity sensor, electrical sensor, electrical relative humidity sensor, and/or another device capable of measuring a relative humidity associated with the egos **140** and providing such measurements as sensor signals.

A steering sensor **170g** may be adapted to physically adjust a heading of the egos **140** according to one or more control signals and/or user inputs provided by a logic device, such as controller **170c.** Steering sensor **170g** may include one or more actuators and control surfaces (e.g., a rudder or other type of steering or trim mechanism) of the egos **140** and may be adapted to physically adjust the control surfaces to a variety of positive and/or negative steering angles/positions. The steering sensor **170g** may also be adapted to sense a current steering angle/position of such steering mechanism and provide such measurements.

A propulsion system **170k** may be implemented as a propeller, turbine, or other thrust-based propulsion system, a mechanical wheeled and/or tracked propulsion system, a wind/sail-based propulsion system, and/or other types of propulsion systems that can be used to provide motive force to the egos **140.** The propulsion system **170k** may also monitor the direction of the motive force and/or thrust of the egos **140** relative to a coordinate frame of reference of the egos **140.** In some embodiments, the propulsion system **170k** may be coupled to and/or integrated with the steering sensor **170g.**

An occupant restraint sensor **1701** may monitor seatbelt detection and locking/unlocking assemblies, as well as other passenger restraint subsystems. The occupant restraint sensor **1701** may include various environmental and/or status sensors, actuators, and/or other devices facilitating the operation of safety mechanisms associated with the operation of the egos **140.** For example, occupant restraint sensor **170l** may be configured to receive motion and/or status data from other sensors depicted in **FIG. 1B****.** The occupant restraint sensor **1701** may determine whether safety measurements (e.g., seatbelts) are being used.

Cameras **170m** may refer to one or more cameras integrated within the egos **140** and may include multiple cameras integrated (or retrofitted) into the ego **140,** as depicted in **FIG. 1C****.** The cameras **170m** may be interior- or exterior-facing cameras of the egos **140.** For instance, as depicted in **FIG. 1C****,** the egos **140** may include one or more interior-facing cameras **170m-1.** These cameras may monitor and collect footage of the occupants of the egos **140.** The egos **140** may also include a forward-looking side camera **170m-2,** a camera **170m-3** (e.g., integrated within the door frame), and a rearward-looking side camera **170m-4.**

In some embodiments, the methods and systems discussed herein can operate exclusively with 2D sensors (e.g., 2D cameras) that may explicitly exclude depth cameras, time-of-flight (ToF) sensors, and other specialized depth-sensing technologies. The AI model and processing pipelines discussed herein can be trained to extract spatial and environmental information solely from monocular or stereo 2D image inputs without relying on depth estimation hardware. This ensures compatibility with 2D camera systems that only transmit captured images without any additional depth data, while maintaining robust performance in autonomous navigation and visual data analysis.

Referring to **FIG. 1B****,** a radar **170n** and ultrasound sensors **170p** may be configured to monitor the distance of the egos **140** to other objects, such as other vehicles or immobile objects (e.g., trees or garage doors). The radar **170n** and the ultrasound sensors **170p** may be integrated into the egos **140** as depicted in **FIG. 1C****.** The egos **140** may also include an autonomous driving or steering system **170o** configured to use data collected via various sensors (e.g., radar **170n,** speed sensor **170d,** and/or ultrasound sensors **170p**) to autonomously navigate the ego **140.**

Therefore, autonomous driving or steering system **170o** may analyze various data collected by one or more sensors described herein to identify driving data. For instance, autonomous driving or steering system **170o** may calculate a risk of forward collision based on the speed of the ego **140** and its distance to another vehicle on the road. The autonomous driving or steering system **170o** may also determine whether the driver is touching the steering wheel. The autonomous driving or steering system **170o** may transmit the analyzed data to various features discussed herein, such as the analytics server.

An airbag activation sensor **170q** may anticipate or detect a collision and cause the activation or deployment of one or more airbags. The airbag activation sensor **170q** may transmit data regarding the deployment of an airbag, including data associated with the event causing the deployment.

Referring back to **FIG. 1A****,** the administrator computing device **120** may represent a computing device operated by a system administrator. The administrator computing device **120** may be configured to display data retrieved or generated by the analytics server **110a** (e.g., various analytic metrics and risk scores), wherein the system administrator can monitor various models utilized by the analytics server **110a,** review feedback, and/or facilitate the training of the AI model(s) **110c** maintained by the analytics server **110a.**

The ego(s) **140** may be any device configured to navigate various routes, such as the vehicle **140a** or the robot **140b.** As discussed with respect to **FIGS. 1B-C,** the ego **140** may include various telemetry sensors. The egos **140** may also include ego computing devices **141.** Specifically, each ego may have its own ego computing device **141.** For instance, the truck **140c** may have the ego computing device **141c.** For brevity, the ego computing devices are collectively referred to as the ego computing device(s) **141.** The ego computing devices **141** may control the presentation of content on an infotainment system of the egos **140,** process commands associated with the infotainment system, aggregate sensor data, manage communication of data to an electronic data source, receive updates, and/or transmit messages. In one configuration, the ego computing device **141** communicates with an electronic control unit. In another configuration, the ego computing device **141** is an electronic control unit. The ego computing devices **141** may comprise a processor and a non-transitory machine-readable storage medium capable of performing the various tasks and processes described herein. For example, the AI model(s) **110c** described herein may be stored and performed (or directly accessed) by the ego computing devices **141.** Non-limiting examples of the ego computing devices **141** may include a vehicle multimedia and/or display system.

In operation, the one or more egos **140** may collect image data from their cameras and transmit the image data to the processor (placed locally on the one or more egos **140**) and/or the analytics server **110a,** as depicted in the data stream **172.** The processor may then execute the AI model(s) **110c** to predict navigational decisions for the one or more egos **140.**

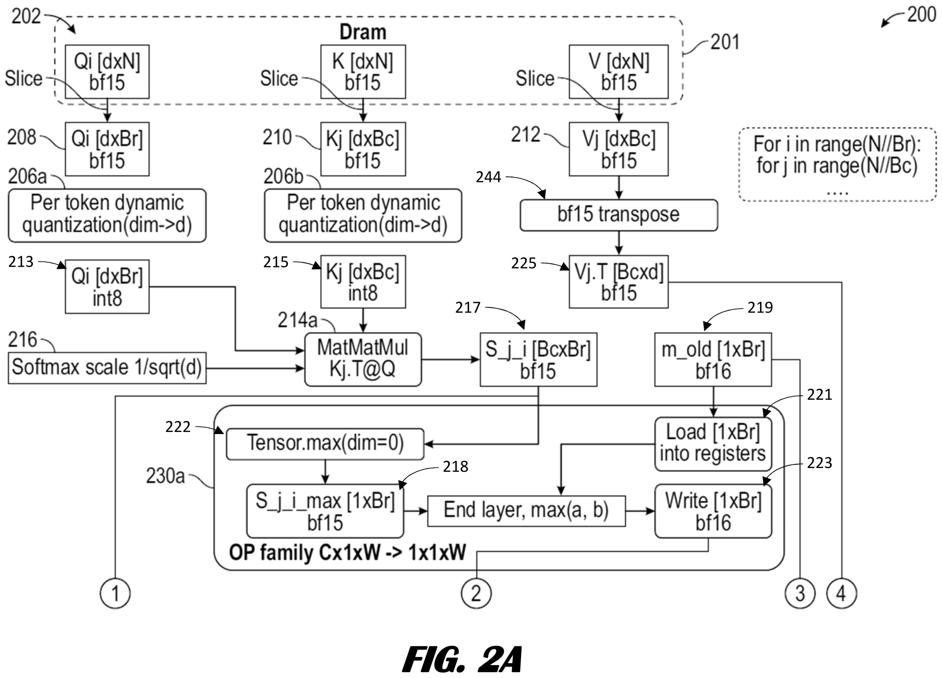

**FIGS. 2A-2C** are example dataflows amongst components of a mixed-precision transformer portion of variants of a machine-learning architecture **200** implementing quantized flash attention. The machine-learning architecture **200** includes a normalization layer that receives input data **202,** dynamic quantization layers **206a-206f** (generally referred to as dynamic quantization layers **206**), query vector projections (referred to as query projections **208**), key vector projections (referred to as key projections **210**), value vector projections (referred to as value projections **212**), matrix multiplication layers **214a-214b** (generally referred to as matrix multiplication layers **214**), an output matrix, an elementwise sum layer, and the predicted output of the transformer of the machine-learning architecture **200.** The components may include processors, such as include INT8 MAC units and SIMD processors, though embodiments are not so limited and may include, for example, INT4 MAC units, INT8 MAC units, INT15 MAC units, and INT16 MAC units, among others.

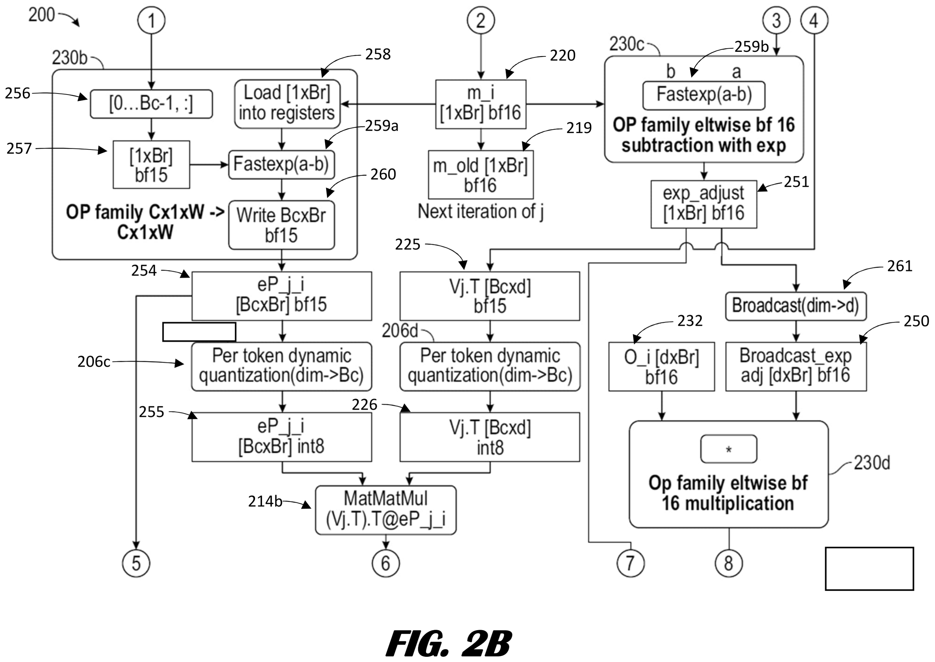

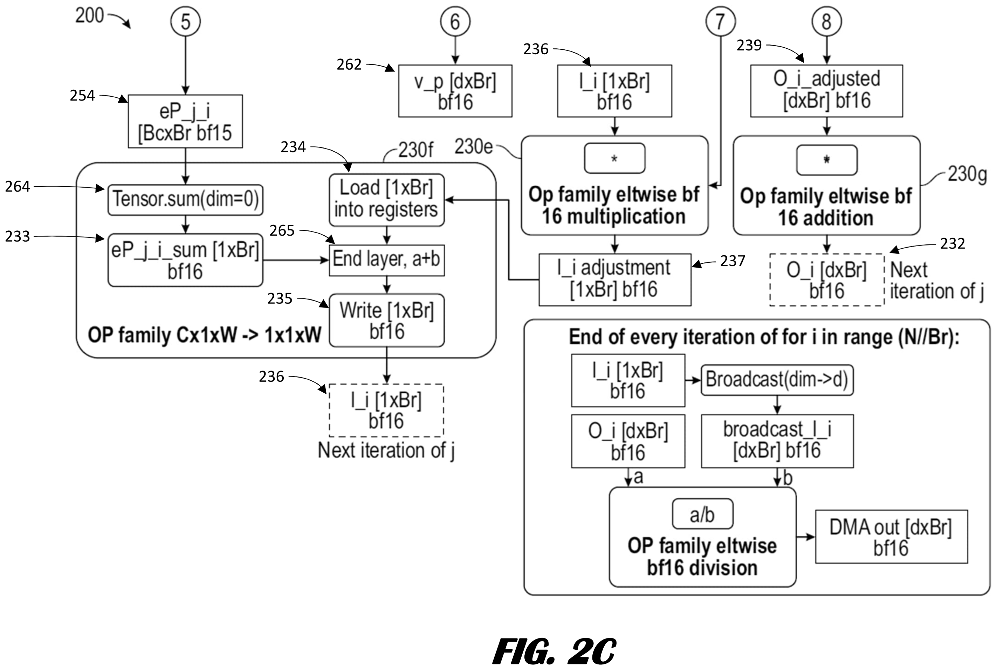

The input data **202** is retrieved from DRAM **201,** may be normalized and split along dimension d. The normalized tensor data is then processed through dynamic quantization layers **206a, 206b,** which perform per-token quantization along a dimension. The quantized data is projected into query vectors **208,** key vectors **210,** and value vectors **212.** These projections query vector **208** and key vectors **210** are further processed by matrix multiplication layer **214a,** which computes similarity scores using a dot product between the key vectors and the query vectors. The matrix multiplication layer **214a** further scales the resulting similarity matrix by a softmax factor **216** and passed through a fused GPU kernel operation represented by OP family block **230a.** In **FIG. 2B****,** additional dynamic quantization layers **206b, 206d** are applied along dimension Bc, and the exponentiation operation is approximated using a fast exponentiation function denoted by OP family block **230b.** The quantized values are then used in a second matrix multiplication operation **230d,** with intermediate results processed by OP family block **230c.** In **FIG. 2C****,** the output of the attention mechanism is aggregated using a summation operation, followed by elementwise multiplication and addition to produce the final output tensor **232** O_i. These operations collectively implement the quantized flash attention mechanism using a combination of INT8 arithmetic, dynamic quantization, and mixed-precision data formats.

The machine-learning architecture **200** receives input data **202** from DRAM **201.** The input data includes any type of data that may be tokenized into one or more tokens, which may include sensor data obtained from a sensor of a robotic device, thought embodiments are not so limited. The input data is sliced and processed through a series of projection layers: query projection **208,** key projection **210,** and value projection **212.** Each of these projections is followed by per-token dynamic quantization layers **206,** which reduce the precision of the feature vectors along the dimension d. The quantized vectors are then used in matrix multiplication layer **214a,** which performs a dot product between the transposed key vector Kj.T and the query vector Qi. This operation of the matrix multiplication layer **214a** produces a similarity matrix S_j_i in bf15 format. The softmax layer **216** applies a scaling factor of 1/√d and uses a running maximum m_old in bf16 format to stabilize the computation. These operations are implemented using OP family block **230a,** which performs fused GPU operations such as Cx1xW → 1x1xW.

A transformer may implement quantized flash attention that includes dynamic per token quantization operations to perform the matrix-matrix multiplication for Q-K multiplication and V multiplication. The dynamic quantization operations can be performed according to various types of data types or data ranges (e.g. dynamic quantization per token to or from, for example, INT4, INT8, or INT4INT16), though the embodiments depicted herein show dynamic quantization to INT8. The transformer uses INT8 data types for the dense arithmetic to get maximal performance and save power. In some implementations, for intermediate values of Q, K, V, the transformer uses a data type optimized for high throughput (e8m6).

Flash attention relies on iteratively updating a running SoftMax and this is kept in native bf16 precision as moving this to lower precision can affect the quality of results. For the result of the exponentiation operation, the transformer may use a data type that does not have the sign bit and instead uses that bit for the mantissa to use a e8m8 data format. Using multiple data types in a single operation is complicated but may confirm that at each point the transformer operations use a maximal bit-width relative to the next operation. The operations in **FIGS. 2A-2C** may be broken down into operations that can be supported on INT8 neural network accelerators.

The machine-learning architecture **200** may utilize a variety of data formats across different stages of the attention computation. For example, INT8 formats may be used for dense matrix multiplications to maximize performance and energy efficiency, while intermediate values may be represented in BF16, E8M7, or E8M8 formats to preserve numerical precision. The use of signless floating-point formats such as E8M7 and E8M8 allows for additional mantissa bits by reallocating the sign bit, which is particularly beneficial for non-negative values such as exponentiation outputs.

In implementing quantized flash attention, the machine-learning architecture **200** includes several optimized GPU kernels, denoted operation family or OP family blocks **230a-230g** (generally referred to as OP family blocks **230**), which represent blocks or collections of operations as implemented in flash attention. In the context of flash attention, the OP family blocks **230** refer to a group of optimized GPU kernels (operations) designed to perform specific tasks for attention computation in a way that reduces memory usage and improves speed. The operations may include a CUDA kernel or a fused GPU function. These are the low-level routines that carry out core computations like matrix multiplication, softmax, and dot products in attention. In some cases, there are multiple variants of the attention operations, each tailored for different use cases, such as different sequence lengths, head sizes, precision types (FP16, BF16), or hardware platforms (e.g., NVIDIA A100, V100 GPUs). Flash attention avoids building full attention matrices in memory by performing blockwise or tiled operations, implemented as specialized OP family blocks **230.** The operations of the OP family blocks **230** may be fused (e.g., multiple steps are combined into one GPU kernel to reduce memory access); tiled (e.g., work is split into small chunks that fit in fast GPU memory, such as registers or shared memory); and/or hardware-optimized (e.g., exploit specific GPU features, such as tensor cores).

The machine-learning architecture **200** obtains input data **202** from a non-transitory machine-readable storage, shown as DRAM **201.** The input sensor data **202** includes various types of sensor data or other inputs generated and used by an automated device, such as a robot or autonomous vehicle. Examples of sensor data for an autonomous vehicle include visual data from cameras, sensor data capturing distances and shapes of surrounding objects, radar data for detecting speed and movement of nearby entities, and ultrasonic data for close-range object detection. Although many embodiments described herein refer to input data as sensor data from automated devices, the disclosed techniques are not limited to such applications. The input data may also include other types of structured or unstructured data, such as text, audio, image embeddings, or synthetic tokens. The quantized flash attention techniques described herein may be applied to any domain where attention-based models are used.

The normalization layer (not shown) includes operations for ingesting and normalizing the input tensors of the input data **202.** The normalization layer is responsible for performing normalization operations on the input sensor data **202,** such as Root Mean Square Normalization (RMS Norm), Layer Normalization (LayerNorm), and other normalization techniques. The ingestion process into the transformer architecture includes normalization operations executed by the normalization layer, which standardizes the input sensor data **202** through techniques such as RMS Norm and LayerNorm.

Subsequently, dynamic quantization layers **206a** and dynamic quantization layers **206b** adjust the precision of the data types from higher-precision formats (e.g., BF15) to lower-precision formats (e.g., INT8), optimizing the data for efficient processing. The transformer utilizes extraction layers (not shown) for parsing input tensors or tokens from the input data **202,** and generating query vectors **208** and key vectors **210** in INT8 format, and value vectors **212** in BF15 format that represent different aspects of each token or element, following a transpose operation **244.** These vectors undergo linear transformations to generate relevant projections used for attention operations, ultimately combining and weighting the value vectors to produce a comprehensive understanding of the input data input data **202.**

The dynamic quantization layers **206** execute dynamic quantization functions to update or change the data type and level of precision of data being handled by components of the machine-learning architecture **200.** For instance, a first dynamic quantization layer **206a** executes the dynamic quantization function on the input data **202** or tensors, to reduce the input data **202** or tensors from a higher precision data type (e.g., floating point BF15) to a lower precision data type (e.g., integer INT8). The processor may store one or more quantization scale factors in a floating-point format, such as FP32. These scale factors may be computed dynamically and stored in registers or other non-transitory machine-readable storage.

During matrix multiplication operations of a matrix multiplication layer **214a,** the processor applies the stored scale factors to one or more of the feature vectors, either prior to or during the computation, to ensure that the quantized representations are appropriately scaled for accurate numerical results.

The transformer of the machine-learning architecture **200** includes layers or functions for extracting vectors for performing attention functions. In operation, an extraction layer (not shown) parses or extracts input elements or (tokens) of the input data **202** and generates or projects these tokens into the query vectors **208** of query projections, the key vectors **210** of key projections, and the value vectors **212** of value projections, in the form of sperate matrices of the respective vectors.

Each token in a sequence of the input data **202** starts with an embedding vector that encapsulates a general meaning. The transformer learns to extract specific aspects of this meaning by applying three separate linear transformations using linear transformation functions, to generate the query vector **208,** key vector **210,** and value vectors **212.**

A query vector **208** of the query projection represents an aspect of a token that will be used to "search" for relevant context. The query vector **208** represents a current element (or token) for which the transformer model is trying to determine which parts of the input data **202** are most relevant when performing the transformer's search function. In some cases, the generates the query vector **208** by projecting the input data **202** using a learned linear transformation.

Key vectors **210** of the key projections represent the features against which the query vector **208** are compared. Each token from the input data **202** is associated with a particular key vector **210** of the key vectors **210,** which serves as an identifier or a reference for performing the transformer's search function. When performing the search function using a query vector **208,** the query vector **208** is compared against each key vector **210** to determine query similarity scores, which indicate how much focus should be placed on each corresponding token represented by the particular key vector **210.**

Each key vector **210** represents or contains the content or information that will be combined, weighted by one or more values or scores. The value vectors **210** represent the "actual" information (e.g., sensor data) of the tokens that will be aggregated. After computing the query similarity scores between the query vector **208** and each key vector **210,** the transformer model uses the query similarity scores to create a weighted sum of the value vectors **210.** This sum represents the attended information relevant to the query.

The attention operations of the transformer of the machine-learning architecture **200** receive the input data **202** in a lower-precision data format (e.g., INT8), and then extract or generate the various projections in a higher-precision format (e.g., BF15). As such, the transformer of the machine-learning architecture **200** may feed the projections into one or more dynamic quantization layers **206a-206b** to reduce the projections to a lower precision data format (e.g., INT8).

The matrix multiplication layers **214** within the transformer processes query vectors **208** (sometimes referred to as query projections **208**), key vectors **210** (sometimes referred to as key vectors **210**), and value vectors **212** (sometimes referred to as value projections **212**) derived from input data **202.** Linear transformations applied to input elements parsed from the input data **202** generate these vectors, encapsulating aspects of each token.

In some cases, the matrix multiplication layer **214a** combines the quantized tensor vectors (query vector **208,** key vectors **210**) through operations that compute similarity scores between the query vectors **208** and the key vectors **210.**

In some cases, these scores determine a weighted sum of corresponding value vectors **212,** that a matrix multiplication layer **214b** uses when producing attended information that represents the input data **202** in a transformed format. In some embodiments, generating the similarity value includes performing a matrix multiplication operation between a first feature vector and a second feature vector. The output of this matrix multiplication comprises a set of similarity scores, where each score represents a measure of correlation or alignment between a token in the first feature vector and a token in the second feature vector. These similarity scores are subsequently used to compute attention weights.

In some cases, prior to the matrix multiplication operation of the matrix multiplication layers **214,** the dynamic quantization layers **206** converts the inputs into lower precision formats, such as INT8, then reverting it to higher precision formats, such as BF15, for downstream operations. The transformer integrates dynamic quantization layers **206** to adjust data precision dynamically, optimizing computational efficiency. Each input token starts with an embedding vector, which undergoes transformations to produce relevant projections used in attention operations.

The softmax layer is implemented to convert the aggregated information from certain vectors into a probability distribution. The softmax layer, for example, takes the weighted sum of the input vectors and applies an exponential function, followed by normalization, to generate a set of probabilities that sum to one. These probabilities represent the attention weights assigned to each token, reflecting the importance of each token in the context of the input data **202.** The softmax operation enables the transformer to focus on relevant tokens by emphasizing those with higher attention weights, thus facilitating effective information retrieval and representation for further processing stages. To further optimize performance on low-precision hardware, the machine-learning architecture **200** may implement a fast exponentiation approximation, such as a fastexp function, in place of the standard exponential function used in softmax computations. This approximation reduces computational overhead while maintaining sufficient accuracy for attention weight generation.

An output matrix (sometimes denoted 'WO') resulting from a matrix multiplication layer **214b** encapsulates the weighted sum of value vectors **212** and combined query vector **208** and key vector **210** derived from the input data **202.** This matrix operates as a representation of the attended information, transformed through a series of linear transformations and attention mechanisms. Each entry in the matrix corresponds to a combination of input elements, reflecting the relevance and context established by the attention functions. The resulting weights in the output matrix indicate the significance of each token within the given sequence, as determined by the similarity scores between the query and key vectors.

The elementwise sum operation in the transformer aggregates corresponding elements as aggregated in the output matrix to produce a single combined vector. This operation involves summing the individual elements of vectors on a per-element basis. For instance, if two vectors have the same dimension, the sum operation will add each element of the first vector to the corresponding element of the second vector, resulting in a new vector of the same dimension. This combined vector integrates information from the input elements, retaining the individual contributions of each vector while producing a new vector that encapsulates the aggregated data. The elementwise sum operation represents a function of synthesizing information across different layers and projections, enabling the transformer to maintain a coherent and comprehensive representation of the input data **202.** In some embodiments, the processor executing the machine-learning architecture **200** aggregates weighted sums across multiple blocks of the input data **202.** This blockwise aggregation enables the system to process long sequences efficiently by dividing the attention computation into smaller, memory-efficient tiles. Each block may be processed independently, and the resulting partial outputs are combined to form the final context representation.

Turning to **FIG. 2A****,** the machine-learning architecture **200** receives the input data **202** from DRAM **201,** which includes query vectors (Q), key vectors (K), and value vectors (V), each represented in a high-throughput floating-point format, such as bf15. These vectors may be generated from upstream embedding layers or projection layers and are stored in DRAM **201** prior to being processed by the quantized flash attention pipeline. The input data **202** is retrieved in blocks and may be normalized and split along the feature dimension d to facilitate downstream quantization and matrix operations. In some implementations, the input data **202** is tiled into submatrices of size dxBr or dxBc, where Br and Bc represent block sizes along the row and column dimensions, respectively. These tiling operations enable efficient memory access and allow the architecture to perform attention computations in a blockwise manner, reducing memory overhead and improving throughput on INT8 hardware accelerators.

The machine-learning architecture **200** includes dynamic quantization layers **206a** and **206b,** which perform per-token quantization of the query and key vectors, respectively. The dynamic quantization layer **206a** receives the query vector Qi in a high-throughput floating-point format (e.g., bf15) and applies a per-token scale factor to convert each token's associated vector into an INT8 representation. The scale factor is computed dynamically based on the value range of the individual feature vector corresponding to each token. Similarly, the dynamic quantization layer **206b** receives the key vector Kj in bf15 format and applies a corresponding per-token scale factor to produce an INT8 representation. These quantization operations are performed dynamically, meaning that the scale factors are computed on-the-fly for each token based on the observed range of values within that token. This enables the machine-learning architecture **200** to maximize the effective bit utilization of the INT8 representation, even in the presence of outliers or non-uniform distributions across tokens. The per-token scale factors may be stored in registers and reused across subsequent operations to minimize memory access overhead. By quantizing the query vectors **208** and key vectors **210** prior to matrix multiplication **214a,** the machine-learning architecture **200** leverages low-power INT8 MAC units.

The machine-learning architecture **200** feeds the query vector **208** and key vectors **210** to the first dynamic quantization layer **206a** and second dynamic quantization layer **206b,** which reduce the precision of the feature vectors of the query vector **208** and key vectors **210,** and output the quantized query vector **213** and quantized key vector **215.**

In parallel to the dynamic quantization layer **206a** and dynamic quantization layer **206b** quantization, the machine-learning architecture **200** performs a transposition operation **244** to prepare the value vector **212** for efficient matrix multiplication. The transposition operation **244** receives the value vectors **212** (Vj) in bf15 format and transposes the value vectors **212** along a respective dimension. The value vector Vj is transposed to produce Vj.T, which is later used in the computation of the weighted sum of values during the attention operation (as in **FIG. 2B**).

The quantized query vector **213** represents the output of the dynamic quantization layer **206a** applied to the query projection **208,** and comprises a matrix of INT8 values corresponding to the original bf15-format query vector Qi. Similarly, the quantized key vector **215** represents the output of the dynamic quantization layer **206b** applied to the key projection **210,** and comprises a matrix of INT8 values corresponding to the original bf15-format key vector Kj. These quantized feature vectors **213, 215** are dimensionally aligned for efficient matrix multiplication in subsequent attention operations. By converting the query vectors **208** and key vectors **210** to INT8 format, the architecture enables execution of dense arithmetic operations on low-power INT8 MAC units. The quantized vectors **213, 215** are used as inputs to the matrix multiplication layer **214a,** which computes the scaled dot-product attention scores in a blockwise fashion.

The machine-learning architecture **200** includes a matrix multiplication layer **214a** and a softmax scaling operation **216,** which together compute scaled dot-product attention scores, in the form of a similarity matrix **217.** The quantized vectors **213, 215** are then used in matrix multiplication layer **214a,** which performs a dot product between the transposed key vector Kj.T (of the quantized key vector **215**) and the quantized query vector **213** (Qi). This matrix multiplication operation of the matrix multiplication layer **214a** produces a similarity matrix **217** (S_j_i in bf15 format). The matrix multiplication layer **214a** receives the quantized query vector **213** and the quantized key vector **215,** both in INT8 format, and performs a tiled matrix multiplication operation to compute the similarity matrix **217** S_j_i. This operation is executed in a blockwise manner, where the quantized query vector **213** and quantized key vector **215** are partitioned into submatrices of size dxBr and dxBc, respectively, to enable efficient use of on-chip memory and INT8 MAC units. The resulting similarity matrix **217** is accumulated or stored in a higher-precision format, such as bf15, to preserve numerical fidelity.

The matrix multiplication layer **214a** may further implement the softmax scaling operation **216,** which applies a normalization factor of 1/√d to the similarity scores **217,** where d is the dimensionality of the feature vectors **213, 215.** This scaling is implemented as a fused operation within the same compute kernel to minimize memory access and latency. The scaled similarity scores **217** are then forwarded to subsequent operations for exponentiation and normalization, using OP family block **230a,** which may perform various fused GPU operations, such as Cx1xW → 1x1xW. Together, the matrix multiplication layer **214a** and the softmax scaling operation **216** form an attention mechanism, enabling the architecture **200** to compute relevance scores between tokens in a computationally efficient and memory-aware manner. The softmax layer **216** applies the scaling factor of 1/√d and uses a running maximum **219** (m_old in bf16) format to stabilize the computation, as in OP family block **230a.**

The output of the matrix multiplication layer **214a** is the similarity matrix **217,** (S_j_i), which represents the attention (similarity) scores between the quantized query vector **213** and quantized key vector **215.** The similarity matrix **217** is computed in a higher-precision format, such as bf15, to preserve the fidelity of the dot-product results despite the quantized INT8 inputs. Each element of the matrix **217** corresponds to the similarity between a specific query vector and a key vector, and the matrix is computed in a blockwise fashion using tiles of size Bc × Br.

The machine-learning architecture **200** includes OP family block **230a,** which implements a max tracking mechanism. The maximum value of each column of the similarity matrix **217** is computed and stored as max similarity values **218** (S_j_i_max), representing the maximum values of the similarity matrix **217.** This max similarity value **218** is compared against a running maximum **219** (m_old), which is maintained across iterations of the inner loop over blocks. The updated maximum **220** (m_i) is computed as the elementwise maximum of the max similarity value **218** (S_j_i_max) and running maximum **219** (m_old), such the machine-learning architecture **200** retains the largest observed value for each column. These max-tracking operations are implemented using a sequence of hardware components and hardware-efficient instructions in the OP family block **230a.** The current maximum values are loaded into registers via a load operation **221,** and the maximum across the current block is computed using a tensor-wide max operation **222.** The updated maximum values are then written back to memory or registers using a write operation **223** (or max write operation). These operations are fused into a single OP family block **230a,** which encapsulates the max tracking logic and is optimized for execution on INT8, bf15, and/or bf16-capable hardware.

Turning to **FIG. 2B****,** the machine-learning architecture **200** continues the quantized flash attention pipeline of the transformer of the machine-learning architecture **200** by performing an exponentiation operation **259a,** as implemented within OP family block **230b,** which encompasses a fused set of operations optimized for low-precision hardware. The machine-learning architecture **200** processes the similarity matrix **217** in a tiled fashion, operating on slices of the matrix referred to as similarity matrix slices **256.** Each slice **256** corresponds to a submatrix of shape Bc × Br, where Bc is the block size along the key dimension and Br is the block size along the query dimension. These slices are extracted from the full similarity matrix **217** and processed independently to enable efficient memory access and parallel computation. By operating on slices **256,** the architecture reduces the working set size to fit within on-chip memory, which is critical for maintaining high throughput on INT8, bf15, and/or bf16-capable accelerators.

For each the similarity matrix slices **256,** the architecture computes a local max value vector **257.** This vector **257** contains the maximum value across the Bc dimension for each of the Br columns in the current similarity matrix slice **256.** The running maximum **220** (m_i) is updated across tiles, and the local max value vector **257** is specific to the current tile and is used for stabilizing the fast exponentiation operation **259b** performed in the OP family block **230c** for that tile. The local max values in the local max value vector **257** are computed in bf15 format and represent the highest similarity scores **217** observed in the current slice **256,** which are then used to shift the exponentiation inputs to avoid numerical overflow.

To facilitate this stabilization, the architecture **200** performs a register load operation **258** that loads the updated running maximum **220** (m_i) into registers, such that the global maximum values of the running maximum **220** are available for the exponentiation operation **259a** among other operations.

The exponentiation of the stabilized similarity scores is performed by the fast exponentiation operation **259a** of the OP family block **230b,** which implements a fast approximation function. This exponentiation operation **259a** receives the difference between each element of the similarity matrix slice **256** and the corresponding local max value from vector **257,** and computes an approximate exponential, which may be in bf15 format. The output of the exponentiation operation **259a** is a matrix of exponentiated similarity scores, which are then forwarded to subsequent stages for quantization and matrix multiplication.

Following the fast exponentiation operation **259a** of the OP family block **230b,** the resulting values are stored using a write operation **260.** This operation writes a matrix of the exponentiated similarity scores **254** (eP_j_i) to memory in bf15 format, preserving the higher-precision representation needed for subsequent attention computations. As written by the write operation **260,** the matrix of the exponentiated similarity scores **254** has dimensions Bc × Br, corresponding to the tile of the attention matrix currently being processed.

Referring to the OP family block **230c** of the machine-learning architecture **200,** the OP family block **230c** may perform operations for a fused exponentiation adjustment using the updated maximum values **220** and the running maximum values **219.** The OP family block **230c** receives these two inputs and executes an elementwise subtraction followed by a fast exponentiation operation **259b** to generate an exponentiation adjustment **251.** The subtraction operation computes the difference between the updated maximum value **220** and the running maximum value **219.** The result of the subtraction is then passed through the fast exponentiation operation **259b,** implemented in bf16 format, to produce an exponentiation adjustment **251.** This fused exponentiation adjustment operation is annotated in **FIG. 2B** as "OP family eltwise bf16 subtraction with exp," which may be executed on low-precision hardware in the example embodiment.

The exponentiation operation **259b,** implemented within the OP family block **230c,** performs the fast approximation using the fast exponentiation operation **259b** on the difference between the updated maximum **220** and the running maximum **219.** This fast exponentiation operation **259b** is designed to be hardware-efficient and is executed in bf16 format to balance precision and performance. The exponentiation operation **259b** may be implemented using a polynomial approximation, lookup table, or other low-latency technique suitable for INT8 and bf16-capable accelerators. The output of the exponentiation operation **259b** of the OP family block **230c** is the exponentiation adjustment **251,** which is used in subsequent normalization steps to scale the exponentiated similarity scores.

The machine-learning architecture **200** includes a broadcast operation **261** that expands the exponentiation adjustment **251** across the feature dimension d. The broadcast operation **261** receives the exponentiation adjustment **251,** represented as a 1×Br vector, and replicates the values along the feature dimension to produce a tensor of shape dxBr. The broadcast operation **261** is annotated in **FIG. 2B** as "Broadcast (dim→d)" and is implemented in bf16 format. The resulting broadcasted tensor includes a broadcasted maximum adjustment **250,** annotated "Broadcast_exp_adj [dxBr]" in the bf16 format.

The machine-learning architecture **200** includes a third per-token quantization layer **206c** and a fourth per-token quantization layer **206d,** which are applied against the exponentiated similarity matrix **254** and the transposed value projection **225,** each represented in bf15 format. The exponentiated similarity matrix **254** contains the result of applying a fast exponentiation function **259a,** where each element of the exponentiated similarity scores **254** reflects the exponentiated attention weight for a corresponding token pair. The transposed value projection **225** represents the value vectors **212** in a format aligned for matrix multiplication, with dimensions Bc×d.

The third per-token dynamic quantization layer **206c** quantizes the exponentiated similarity matrix **254.** The dynamic quantization layer **206c** receives the exponentiated similarity matrix **254** in bf15 format and applies a per-token scale factor to convert the matrix 254 into an INT8 representation. The quantization is performed along the Bc dimension, with a unique scale factor computed for each token in the Br dimension. The resulting quantized tensor, a quantized exponentiated similarity matrix **255,** enables efficient matrix multiplication with INT8-compatible hardware while preserving the relative magnitude of the attention weights. The scale factors used in the quantization process may be stored in registers or other non-transitory machine-readable storage for reuse in downstream operations.

The fourth per-token dynamic quantization layer **206d** quantizes the transposed value projection **225.** The dynamic quantization layer **206d** receives the transposed value projection **225** in bf15 format and applies a per-token scale factor to produce a quantized tensor **226** in INT8 format. The quantization is performed along the Bc dimension, with each token in the d dimension scaled independently. The quantized transposed value projection **226** is dimensionally aligned with the quantized exponentiated similarity matrix **255** for the next matrix multiplication operation of the attention pipeline, at a second matrix multiplication layer **214b.**

The second matrix multiplication layer **214b** receives the quantized exponentiated similarity matrix **255** and the quantized transposed value projection **226** as inputs. The matrix multiplication layer **214b** performs, for example, a dot product between these two INT8 tensors. The quantized exponentiated similarity matrix **255** encodes the attention weights, while the quantized transposed value projection **226** represents the value vectors aligned for efficient matrix operations. The matrix multiplication layer **214b** executes the operation in a tiled fashion, enabling high-throughput computation on INT8 MAC units while preserving numerical fidelity through accumulation in a higher-precision format.

Turning to **FIG. 2C****,** the output of the second matrix multiplication layer **214b** includes a projected value vector **262,** annotated as "v_p [dxBr]" in **FIG. 2C****.** The projected value vector **262** is computed by multiplying the quantized exponentiated similarity matrix **255** with the quantized transposed value projection **226,** and is accumulated or otherwise stored in bf16 format. The projected value vector **262** serves as an intermediate representation of the attended context and may be forwarded to subsequent operations, including a sixth OP family block **230g.**

The OP family block **230f** receives the exponentiated similarity matrix **254,** annotated in **FIG. 2C** as "eP_j_i [BcxBr] bf15," is an output of the fast exponentiation function **259a** (annotated as "Fastexp(a-b)") of the OP family block **230b** (as in **FIG. 2B**). The OP family block **230f,** annotated in **FIG. 2C** as "Cx1xW → 1x1xW," performs the summation and accumulation operations required to normalize the exponentiated similarity scores. The OP family block **230f** receives the exponentiated similarity matrix **254,** annotated as "eP_j_i [BcxBr] bf15," as input, received from the fast exponentiation function **259a** (annotated as "Fastexp(a-b)") of the OP family block **230b** (as in **FIG. 2B**). The OP family block **230f** processes the exponentiated similarity matrix **254** in tiled operations, summing across the Bc dimension to produce a 1×Br vector of total attention weights. The OP family block **230f** includes a summation operation **264,** an exponentiated similarity sum **233,** a register load operation **234,** and a register write operation **235.** The OP family block **230f** concludes with an end-of-layer addition operation **265,** which finalizes the accumulation of exponentiated values for the current tile.

The summation operation **264,** annotated in **FIG. 2C** as "Tensor.sum(dim=0)," computes and returns the sum of each row of an input tensor in a given dimension (dim). In particular, the summation operation **264** computes the sum of exponentiated attention weights across the Bc dimension of the exponentiated similarity matrix **254.** In this way, the summation operation **264** reduces the dimensions of the exponentiated similarity matrix **254** (BcxBr matrix to a 1×Br vector), where each element represents a total unnormalized attention weight for a corresponding query position. The summation operation **264** outputs an exponentiated similarity sum **233.**

The exponentiated similarity sum **233,** annotated in **FIG. 2C** as "eP_j_i_sum [1xBr] bf16," includes a vector resulting from the summation operation **264.** The vector of the exponentiated similarity sum **233** ([1×Br] vector) holds the total attention weight for each query position in the current tile. The OP family block **230f** uses this intermediate result to compute the normalization factor **236,** which is applied in a subsequent multiplication operation within OP family block **230e.**

The register load **234,** annotated in **FIG. 2C** as "Load [1xBr] into registers," retrieves the adjusted normalization factor **237** from memory and stages it into hardware registers for immediate access. The adjusted normalization factor **237** originates from the output of OP family block **230e.** The OP family block **230f** uses the register load **234** to prepare the adjusted normalization factor **237** for accumulation with the exponentiated similarity sum **233** in the subsequent end-of-layer addition operation **265.**

The end-of-layer addition **265,** annotated in **FIG. 2C** as "End layer, a+b," receives two inputs: the exponentiated similarity sum **233** and the adjusted normalization factor **237** loaded by register load **234.** The end-of-layer addition operation **265** performs an elementwise addition between these two 1×Br vectors to produce a final accumulated normalization value **236** for each query position. This addition completes the accumulation of attention weights across all tiles and prepares the result for storage and reuse in the final normalization step.

The write operation **235,** annotated in **FIG. 2C** as "Write [1xBr] bf16," stores the output of the end-of-layer addition **265** into memory, in bf16 format. This stored result becomes the normalization factor **236,** annotated as "l_i [1xBr] bf16," which represents the total unnormalized attention weight for each query position after all tiles have been processed and accumulated. In some cases, system forwards the normalization factor **236** to OP family block **230e.**

The OP family block **230e,** annotated in **FIG. 2C** as "OP family eltwise bf16 multiplication," performs an elementwise multiplication operation between the normalization factor **236** and the exponentiation adjustment **251** (as in **FIG. 2B**). The normalization factor **236** represents the accumulated sum of exponentiated attention weights for each query position, while the exponentiation adjustment **251** accounts for the scaling required to align the exponentiated values across tiles. The OP family block **230e** ingests both inputs as 1×Br vectors in bfl6 format and performs a fused multiply operation to produce the adjusted normalization factor **237.** The adjusted normalization factor **237,** annotated in **FIG. 2C** as "1_i adjustment [1xBr] bf16," represents the output of OP family block **230e.** The architecture computes this 1×Br vector by performing an elementwise multiplication between the normalization factor **236** and the exponentiation adjustment **251.** The adjusted normalization factor **237** incorporates both the accumulated attention weights and the scaling correction required to align exponentiated values across tiles. The OP family block **230e** stores the adjusted normalization factor **237** into memory, and the register load **234** loads the adjusted normalization factor **237** into registers for the operations of the OP family block **230f.**

The OP family block **230g,** annotated in **FIG. 2C** as "OP family eltwise bf16 addition," performs an elementwise addition between the projected value vector **262** ("v_p [dxBr] bf16") and the adjusted output vector **239** ("O_i_adjusted [dxBr] bf16"). The projected value vector **262** represents the tile-wise output of the matrix multiplication layer **214b** (in **FIG. 2B**). The adjusted output vector **239** carries the accumulated result from previous tiles. The OP family block **230g** perform the elementwise addition operation to combine these two dxBr vectors in bf16 format, producing the final output vector **232,** annotated as "O_i [dxBr] bf16" in **FIG. 2C****.** The final output vector **232** encodes the fully aggregated, attention-weighted representation of the input tokens for the current query block.

The architecture **200** illustrated across **FIGS. 2A-2C** presents an example implementation of flash quantization attention. The architecture **200** receives input data **202** from DRAM **201** and processes the input data **202** through a sequence of dynamic quantization layers **206** that perform quantized attention operations. Dynamic quantization layers **206a** and **206b** convert query vector **208** and key vector **210** of the input data **202** into lower-precision formats (quantized query vector **213** and quantized key vector **215**), which are then used in matrix multiplication **214a** to compute similarity scores in the similarity matrix **217.** The similarity matrix **217** is scaled by softmax factor **216** and processed through max tracking logic in the OP family block **230a.** The fast exponentiation function **259a, 259b** generates exponentiated values that populate the exponentiated similarity matrix **254.**

When implementing flash quantized attention, the architecture may implement a fast exponentiation function **259a, 259b** in place of the standard exponential function during softmax computation. This approximation is implemented in OP family block **230b** and is annotated in **FIGS. 2A-2C** as "Fastexp(a-b)." The fastexp function **259a, 259b** reduces computational complexity by using a hardware-efficient approximation that avoids full-precision floating point exponentiation. This substitution enables the architecture **200** to execute softmax operations on INT8 MAC units while maintaining sufficient numerical accuracy for attention weight computation.

The OP family block **230f** performs summation **264** and end-of-layer accumulation **265** to produce the normalization factor **236.** The OP family block **230e** multiplies the normalization factor **236** with exponentiation adjustment **251** to generate adjusted normalization factor **237.** OP family block **230g** adds projected value vector **262** and adjusted output vector **239** to produce final output vector **232.** In this way, the architecture **200** fuses operations, applies mixed-precision arithmetic, and performs blockwise tiling to implement flash quantization attention on low-precision hardware.

In an example embodiment, the architecture **200** is designed to operate efficiently on INT8 MAC hardware. The architecture **200** avoids computationally expensive operations, such as matrix inversion, by using register-preloading and fused-kernel execution. For example, the architecture **200** may implement register-based broadcasting and use dynamic quantization to scale inputs on a per-token basis, which may reduce memory accesses and implement high-throughput execution of attention operations on low-power embedded devices. In this way, the architecture **200** implements and adapts the flash attention for quantization without sacrificing model fidelity or scalability.

In some embodiments, to improve numerical precision in low-bitwidth devices, the architecture **200** employs signless floating point formats for intermediate values. The exponentiation outputs and normalization factors are stored in bf15 and bf16 formats, which correspond to E8M7 and E8M8 layouts, respectively. These formats omit the sign bit and reallocate that bit to the mantissa, increasing the number of significant bits available for representing non-negative values. Optionally, the architecture **200** selects between E8M7 and E8M8 based on throughput and precision requirements at each stage of the attention pipeline.

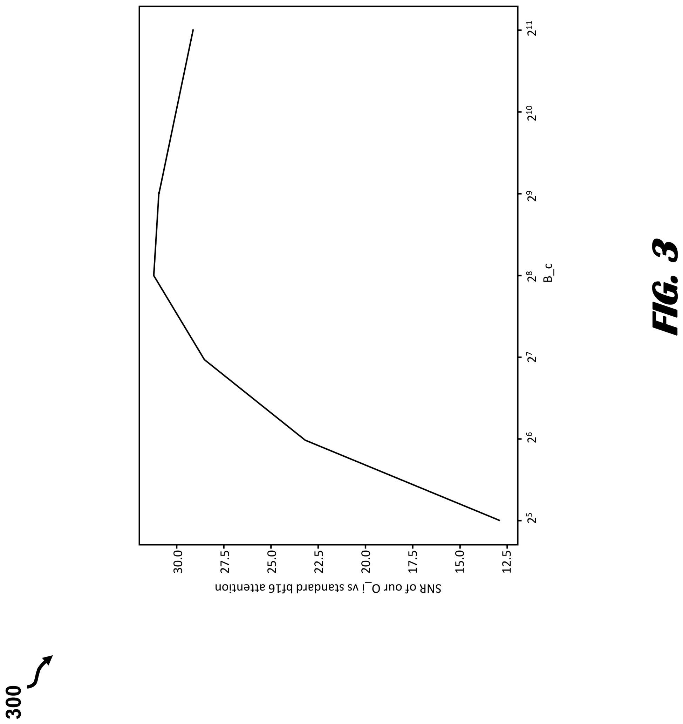

**FIG. 3** is a chart **300** showing results of implementing certain embodiments of a mixed-precision transformer portion of variants of the machine-learning architecture **200** implementing quantized flash attention.

As shown in the chart **300,** as B_c increases, the softmax becomes more precise because there are fewer iterations in the B_c dimension and thus fewer instances that the machine-learning architecture **200** quantizes the partial data vectors. In some circumstances, there are so many values per each quantization scale that the machine-learning architecture **200** eventually experiences a decline in precision after some optimal point.

Prior approaches to implementing quantized flash attention did not have to consider this precision decline, because those prior approaches assumed or otherwise implemented full precision for each operation or layer.

As shown in the chart **300,** the actual values for plot include:
B_c: 32 snr of O_i vs standard_attn_i 12.892674446105957 dB
B_c: 64 snr of O_i vs standard_attn_i 23.295419692993164 dB
B_c: 128 snr of O_i vs standard_attn_i 28.550670623779297 dB
B_c: 256 snr of O_i vs standard_attn_i 31.099319458007812 dB
B_c: 512 snr of O_i vs standard_attn_i 30.97315216064453 dB
B_c: 1024 snr of O_i vs standard_attn_i 30.160747528076172 dB
B_c: 2048 snr of O_i vs standard_attn_i 29.210329055786133 dB

The chart **300** the SNR of the output vector (O_i) as a function of the block size parameter (B_c). The vertical axis represents the SNR in decibels (dB), computed between the quantized output vector and a full-precision baseline output vector, referred to as "standard_attn_i" in the chart **300.** The horizontal axis represents the block size B_c, which controls the granularity of quantization during the attention computation. Each data point in chart **300** corresponds to a specific configuration of the block size, with all other parameters held constant.

As mentioned, the vertical axis represents SNR in decibels (dB), computed between the quantized output vector and a full-precision baseline output, and the horizontal axis represents the block size, which controls the number of key tokens processed per tile in a flash attention loop. The chart **300** demonstrates that SNR improves as the block size increases, from 32 to 256, peaking at an optimal SNR of approximately 31.1 dB, and then the SNR declines as the block size increases further. This non-monotonic behavior reflects a tradeoff between quantization frequency and scale granularity.

The chart **300** includes empirical SNR values for a range of values for the block sizes. At a first block size (Bc=32), the SNR is approximately 12.89 dB. Increasing the block size to 64 improves the SNR to 23.30 dB, and further increases to 128 and 256 produce SNR values of 28.55 dB and 31.10 dB, respectively. Beyond this point, the SNR begins to decline as the block size increases (e.g., 30.97 dB at 512; 30.16 dB at 1024; 29.21 dB at 2048). These values illustrate a non-monotonic relationship between block size and output, indicating an optimal block size for quantized attention.

For example, the peak SNR (observed at block size B_c=256) illustrates a tradeoff between quantization frequency and scale granularity of block sizes. In this example, smaller block values result in more frequent quantization operations and degrade output quality, whereas larger block values reduce the number of quantization operations, but force more values to share the same quantization scale, thereby limiting fine-grained variation. At smaller block sizes, such as B_c=32, the architecture performs more frequent quantization steps, which introduces noise and quality or fidelity. As the block size increases, fewer quantization steps are required, and each tile contains more data, improving the precision of the quantized representation. Beyond a certain point of peak or optimal SNR, then increasing the block size forces more values to share the same quantization scale, which reduces the ability to represent outliers and fine-grained variation. The peak SNR, observed at B_c=256, represents an optimal balance between these competing effects and as a hardware-aware design guideline for selecting block sizes in quantized flash attention.

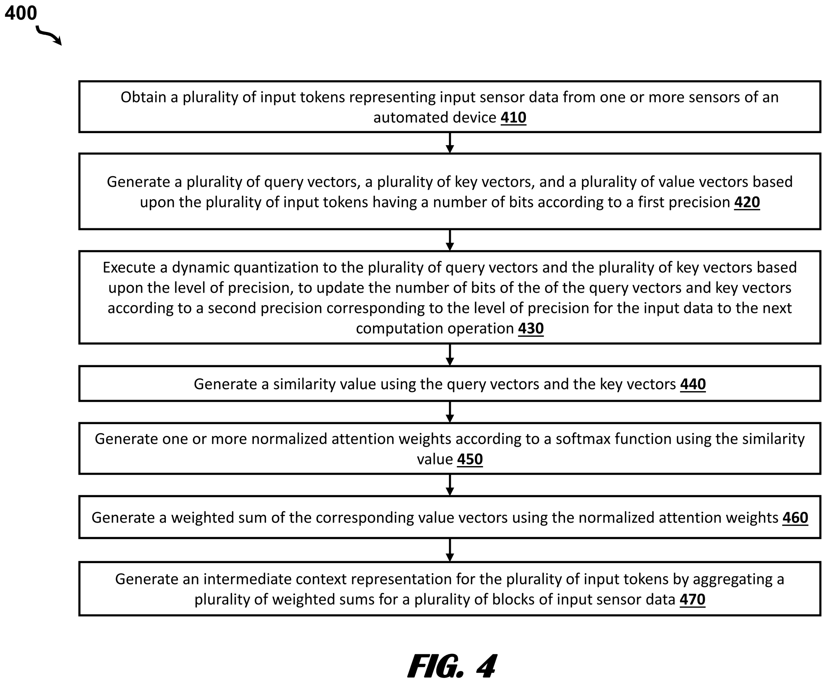

**FIG. 4** is a flowchart of an example method **400** of a mixed-precision transformer portion of a machine-learning architecture implementing quantized flash attention. At operation **410,** a processor obtains a plurality of input tokens representing input sensor data from one or more sensors of an automated device. At operation **420,** the processor generates a plurality of query vectors, a plurality of key vectors, and a plurality of value vectors based upon the plurality of input tokens having a number of bits according to a first precision.

At operation **430,** the processor executes a dynamic quantization to the plurality of query vectors and the plurality of key vectors based upon the level of precision, to update the number of bits of the of the query vectors and key vectors according to a second precision corresponding to the level of precision for the input data to the next computation operation.

At operation **440,** the processor generates a similarity value using the query vectors and the key vectors. At operation **450,** the processor generates one or more normalized attention weights according to a softmax function using the similarity value. At operation 460, the processor generates a weighted sum of the corresponding value vectors using the normalized attention weights.

At operation **470,** the processor generates an intermediate context representation for the plurality of input tokens by aggregating a plurality of weighted sums for a plurality of blocks of input sensor data.

The various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

Embodiments implemented in computer software may be implemented in software, firmware, middleware, microcode, hardware description languages, or any combination thereof. A code segment or machine-executable instructions may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, attributes, or memory contents. Information, arguments, attributes, data, etc. may be passed, forwarded, or transmitted via any suitable means including memory sharing, message passing, token passing, network transmission, etc.

The actual software code or specialized control hardware used to implement these systems and methods is not limiting of the invention. Thus, the operation and behavior of the systems and methods were described without reference to the specific software code being understood that software and control hardware can be designed to implement the systems and methods based on the description herein.

When implemented in software, the functions may be stored as one or more instructions or code on a non-transitory computer-readable or processor-readable storage medium. The steps of a method or algorithm disclosed herein may be embodied in a processor-executable software module which may reside on a computer-readable or processor-readable storage medium. A non-transitory computer-readable or processor-readable media includes both computer storage media and tangible storage media that facilitate transfer of a computer program from one place to another. A non-transitory processor-readable storage media may be any available media that may be accessed by a computer. By way of example, and not limitation, such non-transitory processor-readable media may comprise RAM, ROM, EEPROM, CD-ROM or other optical disk storage, magnetic disk storage or other magnetic storage devices, or any other tangible storage medium that may be used to store desired program code in the form of instructions or data structures and that may be accessed by a computer or processor. Disk and disc, as used herein, include compact disc (CD), laser disc, optical disc, digital versatile disc (DVD), floppy disk, and Blu-Ray disc where disks usually reproduce data magnetically, while discs reproduce data optically with lasers. Combinations of the above should also be included within the scope of computer-readable media. Additionally, the operations of a method or algorithm may reside as one or any combination or set of codes and/or instructions on a non-transitory processor-readable medium and/or computer-readable medium, which may be incorporated into a computer program product.

The preceding description of the disclosed embodiments is provided to enable any person skilled in the art to make or use the present invention. Various modifications to these embodiments will be readily apparent to those skilled in the art, and the generic principles defined herein may be applied to other embodiments without departing from the spirit or scope of the invention. Thus, the present invention is not intended to be limited to the embodiments shown herein but is to be accorded the widest scope consistent with the following claims and the principles and novel features disclosed herein.

While various aspects and embodiments have been disclosed, other aspects and embodiments are contemplated. The various aspects and embodiments disclosed are for purposes of illustration and are not intended to be limiting, with the true scope and spirit being indicated by the following claims.

## Claims

1. A method comprising:
obtaining, by a processor, a plurality of input tokens representing input data;
generating, by the processor, a plurality of feature vectors based upon the plurality of input tokens, the feature vectors having a number of bits according to a first precision;
executing, by the processor, a dynamic quantization to one or more of the feature vectors based upon a level of precision, to update the number of bits of the feature vectors according to a second precision corresponding to the level of precision for the input data to a subsequent computation operation;
generating, by the processor, a similarity value using the feature vectors;
generating, by the processor, one or more attention weights using a normalization function applied to the similarity value;
generating, by the processor, a weighted sum of one or more of the feature vectors using the attention weights; and
generating, by the processor, an intermediate context representation for the plurality of input tokens by aggregating the weighted sums.

2. The method of claim 1, wherein generating the similarity value using the feature vectors includes generating, by the processor, an output of a matrix multiplication operation between a first feature vector and a second feature vector, wherein the output comprises a set of similarity scores between the input tokens of the first feature vector and the input tokens of the second feature vector.

3. The method of claim 2, further comprising storing, by the processor, one or more quantization scale factors in a floating-point format, wherein applying the stored scale factors includes scaling one or more of the feature vectors prior to or during the matrix multiplication operation to generate the similarity scores.

4. The method of one of the preceding claims, wherein the input data comprises sensor data from one or more sensors of an automated device.

5. The method of one of the preceding claims, wherein the feature vectors comprise a query vector, key vector, and a value vector.

6. The method of claim 5, wherein the dynamic quantization is performed per-token for each of the query vector, the key vector, and the value vector.

7. The method of one of the preceding claims, wherein the second precision comprises an integer format, and the method further comprises using a higher-precision floating-point format for softmax computation and intermediate values.

8. The method of one of the preceding claims, wherein the method includes using a signless floating-point format for intermediate values, wherein a sign bit is reallocated to increase mantissa precision.

9. The method of one of the preceding claims, wherein the normalization function includes a fast exponentiation approximation.

10. The method of one of the preceding claims, wherein the processor aggregates a plurality of weighted sums for a plurality of blocks of the input data.

11. A system comprising:
a processor configured to perform the method of one of the preceding claims.
